# EUROPÄISCHE PATENTSCHRIFT

(11) **EP 2 507 880 B1**
(45) Veröffentlichungstag und Bekanntmachung des Hinweises auf die Patenterteilung: **27.05.2015**
(21) Anmeldenummer: 10781662.1
(22) Anmeldetag: 16.11.2010
(51) Int. Cl.: H02G 3/30

(54) **BEFESTIGUNGSVORRICHTUNG**
FASTENING DEVICE
DISPOSITIF DE FIXATION

(30) Priorität: 03.12.2009 DE 102009056801
(43) Veröffentlichungstag der Anmeldung: 10.10.2012
(73) Patentinhaber: A. RAYMOND et Cie, 38000 Grenoble (FR)
(72) Erfinder: HAUSER, Ingo, 79400 Kandern (DE)
(74) Vertreter: RACKETTE Partnerschaft Patentanwälte
(86) Internationale Anmeldenummer: PCT/EP2010/067566
(87) Internationale Veröffentlichungsnummer: WO 2011/067106

(56) Entgegenhaltungen:
- DE-A1- 10 328 989
- DE-U1-202005 017 160
- US-A- 5 806 812

## Beschreibung

Die Erfindung betrifft eine Befestigungsvorrichtung gemäß dem Oberbegriff des Patentanspruches 1.

Eine derartige Befestigungsvorrichtung ist aus DE 103 28 989 A1 bekannt. Die vorbekannte Befestigungsvorrichtung verfügt über einen sich in einer Längsrichtung erstreckenden länglichen Einsteckfuß und über eine sich rechtwinklig zur Längsrichtung beidseitig des Einsteckfußes und jeweils einem Querschnitt erstreckende Auflageplatte, die zum Befestigen einer Kabelanordnung dient. Der Einsteckfuß ist in eine in einem Trägerteil eingebrachte Einsteckausnehmung einfügbar, um die Befestigungsvorrichtung mit dem Trägerteil zu verbinden. Bei dieser vorbekannten Befestigungsvorrichtung weist jeder Querabschnitt einen Federarm auf, der in Längsrichtung federnd angeformt ist. Im Bereich des freien Endes jedes Federarmes ist ein sich in Längsrichtung in Richtung des Einsteckfußes erstreckender Anschlagsteg ausgebildet.

Eine weitere Befestigungsvorrichtung ist aus DE 198 28 073 C1 bekannt. Die Befestigungsvorrichtung verfügt über einen sich in einer Längsrichtung erstreckenden länglichen Einsteckfuß und über eine sich rechtwinklig zur Längsrichtung beidseitig des Einsteckfußes mit jeweils einem Querabschnitt erstreckende Auflageplatte, die zum Befestigen einer Kabelanordnung dient. Der Einsteckfuß ist in eine in einem Trägerteil eingebrachte Einsteckausnehmung einfügbar, um die Befestigungsvorrichtung mit dem Trägerteil zu verbinden.

Der Erfindung liegt die Aufgabe zugrunde, eine Befestigungsvorrichtung der eingangs genannten Art anzugeben, mit der Toleranzen in der Relativlage zwischen einem in einem Anbauteil ausgebildeten Langloch und einer in einem Trägerteil ausgebildeten Einsteckausnehmung ausgleichbar sind.

Diese Aufgabe wird bei einer Befestigungsvorrichtung der eingangs genannten Art erfindungsgemäß mit den kennzeichnenden Merkmalen des Patentanspruches 1 gelöst.

Durch das Ausbilden der federnden Federarme mit den Aufgleitschrägen lassen sich Toleranzen in der Relativlage zwischen der Einsteckausnehmung und dem Langloch sowie in den absoluten Dimensionen des Langloches ausgleichen, da die Aufgleitschrägen zusammen mit der Federkraft der Federarme eine Selbstzentrierung bewirken und gegebenenfalls auch eine seitlich versetzte Anordnung gestatten.

Weitere zweckmäßige Ausgestaltungen der Erfindung sind Gegenstand der Unteransprüche.

Weitere Ausgestaltungen und Vorteile der Erfindung ergeben sich aus der nachfolgenden Beschreibung eines Ausführungsbeispieles mit Bezug auf die Figuren der Zeichnung.

Es zeigen:
- Fig. 1: in einer perspektivischen Ansicht ein Ausführungsbeispiel einer Befestigungsvorrichtung mit Blick auf einen Einsteckfuß,
- Fig. 2: in einer perspektivischen Ansicht das Ausführungsbeispiel gemäß Fig. 1 mit Blick auf die dem Befestigungsfuß abgewandte Seite,
- Fig. 3: in einer Schnittansicht das Ausführungsbeispiel gemäß Fig. 1 und Fig. 2 in einer Endmontageposition beim Befestigen eines ein überdimensioniertes Langloch aufweisendes Trägerteil an einem Anbauteil und
- Fig. 4: in einer Schnittansicht das Ausführungsbeispiel gemäß Fig. 1 und Fig. 2 in einer Endmontageposition beim Befestigen eines ein passgenau ausgebildetes Langloch aufweisendes Anbauteil an einem Trägerteil.

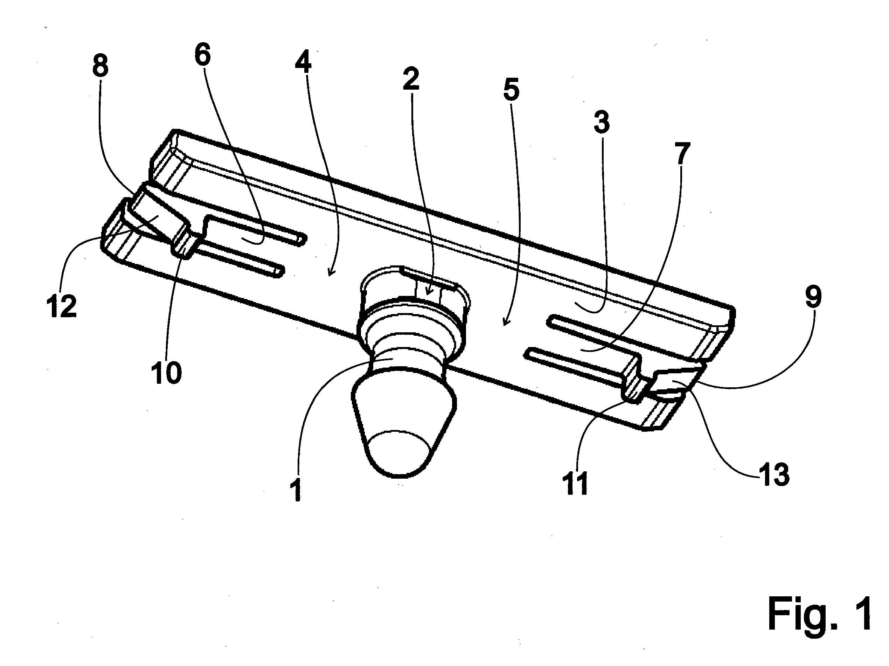

Fig. 1 zeigt in einer perspektivischen Ansicht ein Ausführungsbeispiel einer erfindungsgemäßen Befestigungsvorrichtung. Die Befestigungsvorrichtung gemäß Fig. 1 verfügt über einen in der Darstellung gemäß Fig. 1 dem Betrachter zugewandten, sich in einer Längsrichtung erstreckenden länglichen Einsteckfuß 1, der im Bereich einer im Querschnitt verjüngten Einschnürung 2 an einer Unterseite einer im Wesentlichen rechteckförmig ausgebildeten plattenartigen Auflageplatte 3 angeformt ist. Beidseitig des Einsteckfußes 1 erstreckt sich rechtwinklig zu der Längsrichtung in einer Querrichtung jeweils ein Querabschnitt 4, 5 der Auflageplatte 3.

In jedem Querabschnitt 4, 5 ist ein Federarm 6, 7 ausgebildet, der in einem Abstand von dem Einsteckfuß 1 angebunden ist und dessen freies Ende 8, 9 bündig mit der dem Einsteckfuß 1 abgewandten Stirnseite des jeweiligen Querabschnittes 4, 5 abschließt. Im Bereich des freien Endes 8, 9 jedes Federarmes 6, 7 ist ein sich in Längsrichtung in Richtung des Einsteckfußes 1 erstreckender Anschlagsteg 10, 11 sowie eine sich von dem Anschlagsteg 10, 11 in Richtung des freien Endes 8, 9 erstreckende Aufgleitschräge 12, 13 ausgebildet. Jede Aufgleitschräge 12, 13 erstreckt sich von dem jeweiligen Anschlagsteg 10, 11 von dem Einsteckfuß 1 weg.

Die sich auf der den Aufgleitschrägen 12, 13 abgewandten Seiten der Anschlagstege 10, 11 erstreckenden, dem Einsteckfuß 1 zugewandten Bereiche der Federarme 6, 7 schließen in einer relaxierten Anordnung der Federarme 6, 7 bündig mit der dem Einsteckfuß 1 zugewandten Seite der Querabschnitte 4, 5 ab.

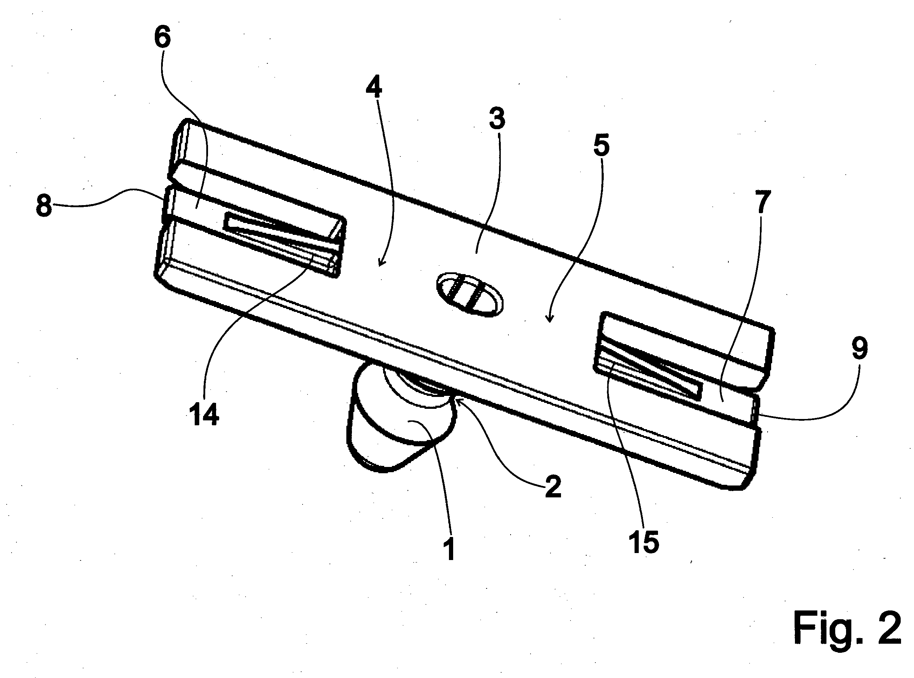

Fig. 2 zeigt in einer perspektivischen Ansicht das Ausführungsbeispiel einer erfindungsgemäßen Befestigungsvorrichtung gemäß Fig. 1 mit Blick auf die dem Einsteckfuß 1 abgewandte Seite der Auflageplatte 3. Aus Fig. 2 ist ersichtlich, dass die dem Einsteckfuß 1 abgewandten Seiten der Federarme 6, 7 gegenüber der dem Einsteckfuß 1 abgewandten Oberseite der Auflageplatte 3 in Richtung des Einsteckfußes 1 zurück versetzt sind. Weiterhin lässt sich Fig. 2 entnehmen, dass an jedem Federarm 6, 7 eine Versteifungsrippe 14, 15 ausgebildet ist, die sich von den den freien Enden 8, 9 abgewandten Anbindungsenden der Federarme 6, 7 in Längsrichtung des Einsteckfußes 1 verjüngend in Richtung der freien Enden 8, 9 der Federarme 6, 7 erstrecken.

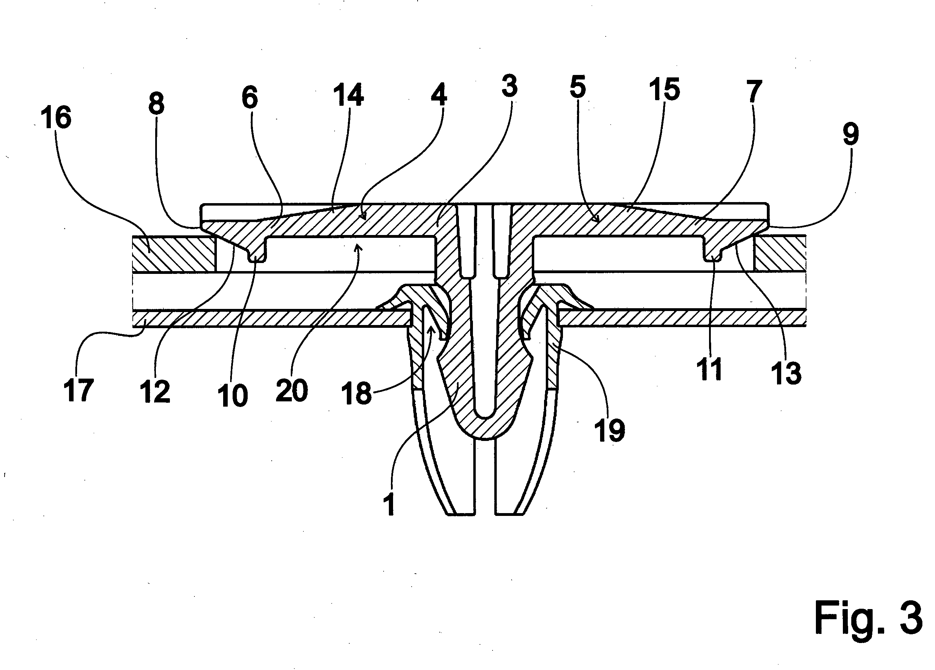

Fig. 3 zeigt in einer Schnittansicht das Ausführungsbeispiel einer erfindungsgemäßen Befestigungsvorrichtung gemäß Fig. 1 und Fig. 2 in einer Endmontageposition beim Befestigen eines Anbauteiles 16 an einem Trägerteil 17. Das Trägerteil 17 ist mit einer Einsteckausnehmung 18 ausgebildet, in die eine Aufnahmehülse 19 eingefügt ist. In die Aufnahmehülse 19 wiederum ist der Einsteckfuß 1 eingesteckt. Das Anbauteil 16 weist ein sich in Querrichtung der erfindungsgemäßen Befestigungsvorrichtung erstreckendes Langloch 20 auf, das von der Auflageplatte 3 überdeckt ist und in das die Federarme 6, 7 eingreifen.

In einer nicht gezeigten, der Endmontageposition vorangehenden Vormontageposition, in der der Einsteckfuß 1 in das Langloch 20 eingefügt ist, ist das Anbauteil 16 durch seitlichen Eingriff der Einschnürung 2 mit den langen Rändern des Langlochs 20 an dem Anbauteil 16 vorfixiert.

In der Anordnung gemäß Fig. 3 ist das Langloch 20 in Querrichtung größer dimensioniert als der Abstand zwischen den in Richtung der freien Enden 8, 9 der Federarme 6, 7 weisenden Seiten der Anschlagstege 10, 11, so dass die Aufgleitschrägen 12, 13 unter einer gewissen Flexion der Federarme 6, 7 an den Rändern des Langloches 20 aufliegen und zusammen mit der in Längsrichtung des Einsteckfußes 1 durch die Federarme 6, 7 ausgeübte Federkraft eine Selbstzentrierung des Anbauteiles 16 in Bezug auf das Trägerteil 17 bewirken.

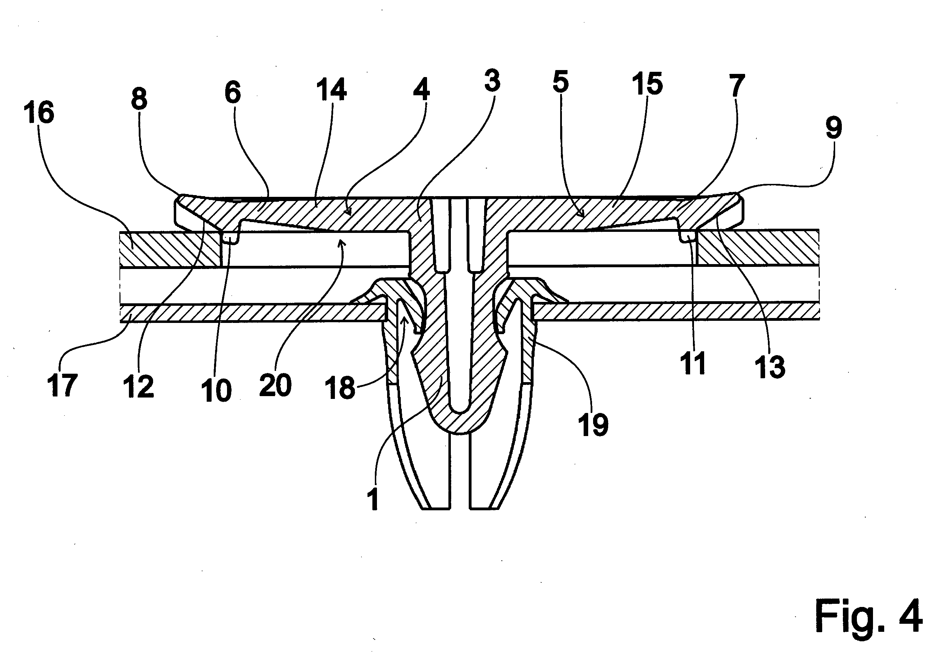

Fig. 4 zeigt in einer Schnittansicht das Ausführungsbeispiel gemäß Fig. 1 und Fig. 2 in einer Endmontageposition entsprechend der Darstellung gemäß Fig. 3, wobei jedoch in der Anordnung gemäß Fig. 4 das in dem Anbauteil 16 ausgebildete Langloch 20 in Querrichtung der erfindungsgemäßen Befestigungsvorrichtung eine Dimension aufweist, die dem Abstand der den freien Enden 8, 9 der Federarme 6, 7 zugewandten Außenseiten der Anschlagstege 10, 11 entspricht, so dass das Langloch 20 als Fixloch ausgebildet ist. Auch in dieser Anordnung ist die erfindungsgemäße Befestigungsvorrichtung unter nunmehr deutlichem Aufbiegen der Federarme 6, 7 zentriert in dem Langloch 20 ausgerichtet, um ein unproblematisches Einfügen des Einsteckfußes 1 in die Aufnahmehülse 19 sicherzustellen. Aufgrund der Verjüngung der Versteifungsrippen 14, 15 bleibt die Baudicke der erfindungsgemäßen Vorrichtung trotz des Aufbiegens der Federarme 6, 7 auch hier im wesentlichen unverändert.

Durch die schwimmende, selbstzentrierende Lagerung der erfindungsgemäßen Vorrichtung in dem Langloch 20 auch bei in Querrichtung der erfindungsgemäßen Vorrichtung größeren Dimensionen als bei einem Fixloch gemäß Fig. 4 lässt sich somit ein Anbauteil 16 zuverlässig mit einem Trägerteil 17 verbinden.

## Patentansprüche

1. Befestigungsvorrichtung mit einem sich in einer Längsrichtung erstreckenden länglichen Einsteckfuß (1) und mit einer sich rechtwinklig zur Längsrichtung beidseitig des Einsteckfußes (1) mit jeweils einem Querabschnitt (4, 5) in einer Querrichtung erstreckenden Auflageplatte (3), wobei jeder Querabschnitt (4, 5) einen Federarm (6, 7) aufweist, der in Längsrichtung federnd angeformt ist, und wobei im Bereich des freien Endes (8, 9) jedes Federarmes (6, 7) ein sich in Längsrichtung in Richtung des Einsteckfußes (1) erstreckender Anschlagsteg (10, 11) ausgebildet ist, **dadurch gekennzeichnet, dass** im Bereich des freien Endes (8, 9) jedes Federarmes (6, 7) weiterhin eine sich von dem Anschlagsteg (10, 11) in Richtung des freien Endes (8, 9) erstreckende Aufgleitschräge (12, 13) ausgebildet ist, wobei sich jede Aufgleitschräge (12, 13) von dem jeweiligen Anschlagsteg (10, 11) und von dem Einsteckfuß (1) weg erstreckt.

2. Befestigungsvorrichtung nach Anspruch 1, **dadurch gekennzeichnet, dass** jeder Federarm (6, 7) gegenüber der dem Einsteckfuß (1) abgewandten Seite der Auflageplatte (3) in Richtung des Einsteckfußes (1) versetzt angeordnet ist.

3. Befestigungsvorrichtung nach Anspruch 2, **dadurch gekennzeichnet, dass** jeder Federarm (6, 7) an der dem Einsteckfuß (1) zugewandten Seite angebunden ist.

4. Befestigungsvorrichtung nach Anspruch 3, **dadurch gekennzeichnet, dass** jeder Federarm (6, 7) mit einer Versteifungsrippe (14, 15) verbunden ist, die auf der dem Anschlagsteg (10, 11) gegenüber liegenden Seite des Federarmes (6, 7) ausgebildet ist.

5. Befestigungsvorrichtung nach Anspruch 4, **dadurch gekennzeichnet, dass** die Versteifungsrippen (14, 15) von Anbindungsenden in Richtung von freien Enden (8, 9) verjüngend ausgebildet sind.

## Claims

1. Fastening device having an elongate insertion foot (1) extending in a longitudinal direction and having a supporting plate (3) extending to each side of the insertion foot (1) with a transverse section (4, 5) perpendicularly to the longitudinal direction, wherein each transverse section (4, 5) comprises a spring arm (6, 7) which is formed on resiliently in the longitudinal direction and wherein, in the region of the free end (8, 9) of each spring arm (6, 7), a stop web (10, 11) extending longitudinally in the direction of the insertion foot (1) is formed, **characterised in that**, also provided in the region of the free end (8, 9) of each spring arm (6, 7) is a sliding incline (12, 13) extending from the stop web (10, 11) in the direction of the free end (8, 9), wherein each sliding incline (12, 13) extends away from the respective stop web (10, 11) and away from the insertion foot (1).

2. Fastening device according to claim 1, **characterised in that** each spring arm (6, 7) is arranged offset in the direction of the insertion foot (1) relative to the side of the supporting plate (3) facing away from the insertion foot (1).

3. Fastening device according to claim 2, **characterised in that** each spring arm (6, 7) is connected at the side facing toward the insertion foot (1).

4. Fastening device according to claim 3, **characterised in that** each spring arm (6, 7) is connected to a stiffening rib (14, 15) which is formed on the side of the spring arm (6, 7) opposite the stop web (10, 11).

5. Fastening device according to claim 4, **characterised in that** the stiffening ribs (14, 15) are configured narrowing from the connecting ends in the direction of the free ends (8, 9).

## Revendications

1. Dispositif de fixation se composant d'une patte d'emmanchement (1) de forme allongée s'étendant dans le sens longitudinal et se composant d'une plaquette d'appui (3) s'étendant dans le sens transversal en angle droit par rapport au sens longitudinal de part et d'autre de la patte d'emmanchement (1) en définissant respectivement une portion transversale (4, 5), chaque portion transversale (4, 5) étant en l'occurrence munie d'un segment élastique (6, 7), qui est réalisé solidaire de celle-ci par moulage, dans le plan longitudinal, avec la possibilité de réagir élastiquement, et dans lequel il est prévu, dans la zone de l'extrémité libre (8, 9) de chaque segment élastique (6, 7), une nervure de butée (10, 11) s'étendant dans le sens longitudinal dans la direction de la patte d'emmanchement (1), **caractérisé en ce qu'**il est en outre prévu, dans la zone de l'extrémité libre (8, 9) de chaque segment élastique (6, 7), une portion de glissement à disposition inclinée (12, 13) qui s'étend de la nervure de butée (10, 11) d ans la direction de l'extrémité libre (8, 9), chaque portion de glissement à disposition inclinée (12, 13) s'étendant en l'occurrence vers l'extérieur depuis la nervure de butée (10, 11) respective et depuis la patte d'emmanchement (1).

2. Dispositif de fixation selon la revendication 1, caractérisé ne ce que chaque segment élastique (6, 7) est disposé décalé dans la direction de la patte d'emmanchement (1) par rapport au côté de la plaquette d'appui (3) opposé à la patte d'emmanchement (1).

3. Dispositif de fixation selon la revendication 2, **caractérisé en ce que** chaque segment élastique (6, 7) est raccordé au côté orienté en direction de la patte d'emmanchement (1).

4. Dispositif de fixation selon la revendication 3, **caractérisé en ce que** chaque segment élastique (6, 7) est raccordé à une nervure de renforcement (14, 15), qui est ménagée sur le côté du segment élastique (6, 7) opposé à la nervure de butée (10, 11).

5. Dispositif de fixation selon la revendication 4, **caractérisé en ce que** les nervures de renforcement (14, 15) vont, depuis leurs extrémités de raccordement, en s'amenuisant dans la direction des extrémités libres (8, 9).
